# EUROPÄISCHE PATENTANMELDUNG

(11) **EP 0 749 994 A1**
(43) Veröffentlichungstag der Anmeldung: **27.12.1996**
(21) Anmeldenummer: 96109253.3
(22) Anmeldetag: 10.06.1996
(51) Int. Cl.: C08G 18/28, C09D 5/02

(54) **Fluor enthaltende Dispergierhilfsmittel für wässrige Lacke**

(30) Priorität: 21.06.1995 DE 19522476
(71) Anmelder: BAYER AG, 51368 Leverkusen (DE)
(72) Erfinder: Kirchmeyer, Stephan, Dr., 51375 Leverkusen (DE); Mazanek, Jan, Dr., 51061 Köln (DE); Käsler, Karl-Heinz, 51467 Bergisch Gladbach (DE)

(57) **Zusammenfassung**

Ein Verfahren zur Herstellung von wasserlöslichen, Perfluoralkylgruppen enthaltenden Polyadditionsverbindungen durch Umsetzung einer Polyisocyanatkomponente A) mit einer Fluor enthaltenden Alkoholkomponente B), hydrophilen einwertigen Polyetheralkoholen C), tert. Aminen mit gegenüber Isocyanatgruppen reaktionsfähigen Gruppen D), und gegebenenfalls sonstigen, von den Komponenten B) bis D) verschiedenen, im Sinne der NCO-Additionsreaktion ein- oder mehrwertigen Aufbaukomponenten E) unter Einhaltung einer NCO-Kennzahl von 80 bis 200, die nach diesem Verfahren erhältlichen Polyadditionsverbindungen und ihre Verwendung als Dispergiermittel bei der Einarbeitung von Feststoffen in wäßrige Lacke oder Beschichtungsmittel.

## Beschreibung

Die Erfindung betrifft ein Verfahren zur Herstellung von wasserlöslichen, Perfluoralkylgruppen aufweisenden Polyadditionsverbindungen, die nach diesem Verfahren erhältlichen Verbindungen und ihre Verwendung als Dispergiermittel bei der Einarbeitung von Feststoffen in wäßrige Lacke oder Beschichtungsmittel.

Um Feststoffe in flüssige Medien einzubringen, sind hohe mechanische Kräfte notwendig. Dies hängt in hohem Maß von der Benetzbarkeit des Feststoffs durch das umgebende Medium sowie von der Affinität zu diesem Medium ab. Um diese Dispergierkräfte zu reduzieren, ist es üblich, Dispergierhilfsmittel anzuwenden, welche die Einarbeitung erleichtern. Hierbei handelt es sich meistens um oberflächenaktive Stoffe, auch Tenside genannt, von anionen- oder kationenaktiver sowie nichtionogener Struktur. Diese Stoffe werden in relativ geringen Zusatzmengen entweder auf den Feststoff direkt aufgebracht oder dem Dispergiermedium zugesetzt. Durch ein solches Tensid wird der Dispergieraufwand wesentlich reduziert.

Bekannt ist weiterhin, daß diese Feststoffe nach dem Dispergieren wieder zum Reagglomerieren neigen, was den zuvor aufgewendeten Dispergieraufwand zunichte macht und zu gravierenden Problemen führt. Dieses Phänomen erklärt man sich durch London/van der Waalsche Kräfte, durch welche sich die Feststoffe gegenseitig anziehen. Um diese Anziehungkräfte zu überlagern, müssen Adsorptionsschichten auf die Feststoffe aufgebracht werden. Dies geschieht durch die Verwendung solcher Tenside.

Während und nach der Dispergierung tritt jedoch eine Wechselwirkung des umgebenden Mediums mit dem Feststoffpartikel ein, und es erfolgt eine Desorption des Tensids unter Austausch gegen das, in höherer Konzentration vorliegende, umgebende Medium. Dieses umgebende Medium ist jedoch in den meisten Fällen nicht in der Lage, solche stabilen Adsorptionsschichten aufzubauen und das ganze System bricht zusammen. Dies macht sich z.B. bemerkbar durch Viskositätsanstieg in flüssigen Systemen und Glanzverluste und Farbtonverschiebungen in Lacken und Beschichtungen.

Es fehlte daher nicht an Versuchen, wirksame Dispergiermittel für Feststoffe, insbesondere Pigmente zur Verfügung zu stellen, die insbesondere die Einarbeitung von derartigen Feststoffen in Lösungsmittel enthaltende Lacke der an sich bekannten Art erleichtern und die Herstellung von sedimentationsstabilen Beschichtungsmitteln gestatten. So werden beispielsweise in EP-A-0 154 678, EP-A-0 205 510 oder EP-A-0 335 197 für diesen Zweck gut geeignete Dispergierhilfsmittel beschrieben.

Die der vorliegenden Erfindung zugrundeliegende Aufgabe bestand jedoch darin, geeignete Dispergiermittel für Feststoffe, insbesondere Pigmente bei deren Einarbeitung in wäßrige Lacke und Beschichtungsmittel zur Verfügung zu stellen.

Diese Aufgabe konnte mit der Bereitstellung des nachstehend näher beschriebenen Verfahrens bzw. der nach diesem Verfahren erhältlichen wasserlöslichen, Perfluoralkylgruppen enthaltenden Polyadditionsverbindungen gelöst werden. Wie sich nämlich zeigte, sind wasserlösliche, Perfluoralkylgruppen enthaltende Polyadditionsverbindungen der nachstehend näher beschriebenen Art, deren Wasserlöslichkeit durch eingebaute Ethylenoxideinheiten in einer Menge von mindestens 30 Gew.-% gewährleistet ist, hervorragend als Dispergierhilfsmittel, d.h. insbesondere auch als Netz-, Antiabsetz- und Verlaufsmittel für Feststoffe in wäßrigen Lacken oder Beschichtungsmitteln bzw. für derartige Feststoffe dispergiert enthaltende Lacke oder Beschichtungsmittel geeignet.

Gegenstand der Erfindung ist ein Verfahren zur Herstellung von wasserlöslichen, Perfluoralkylgruppen enthaltenden Polyadditionsverbindungen, dadurch gekennzeichnet, daß man
A) eine Polyisocyanatkomponente einer (mittleren) NCO-Funktionalität von mindestens 2,5 und einem NCO-Gehalt von 5 bis 50 Gew.-%
mit
B) 0,1 bis 50 Äquivalent-%, bezogen auf die Isocyanatgruppen von A), einer Fluor enthaltenden Alkoholkomponente, bestehend aus mindestens einer Verbindung der allgemeinen Formel (I) 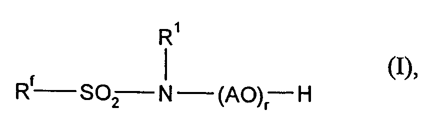 in welcher
   R^{f} für eine Perfluoralkylgruppe mit 4 bis 20 Kohlenstoffatomen steht,
   R¹ eine Alkylgruppe mit 1 bis 6 Kohlenstoffatomen bedeutet,
   AO für einen Alkylenoxidrest mit 2 bis 10 Kohlenstoffatomen steht und
   r eine Zahl von 1 bis 3 bedeutet,
C) 5 bis 90 Äquivalent-%, bezogen auf die Isocyanatgruppe von A), einer einwertigen Alkoholkomponente, bestehend aus mindestens einem einwertigen Polyetheralkohol des Molekulargewichtsbereichs 150 bis 5000 mit einem Gehalt an Ethylenoxideinheiten von 50 bis 99,5 Gew.-%, der durch Alkoxylierung eines einwertigen Startermoleküls hergestellt worden ist,
D) 5 bis 80 Äquivalent-%, bezogen auf die Isocyanatgruppen von A), einer Aminkomponente, bestehend aus mindestens einem tertiären Amin des Molekulargewichtsbereichs 88 bis 250 mit einer gegenüber Isocyanatgruppen im Sinne der NCO-Additionsreäktion reaktionsfähigen Gruppe
und
E) 0 bis 40 Äquivalent-%, bezogen auf die Isocyanatgruppen von A), an von den Komponenten B) bis D) verschiedenen, im Sinne der NCO-Additionsreaktion ein- oder mehrwertigen Aufbaukomponenten mit einem Gehalt an Ethylenoxideinheiten von weniger als 50 Gew.-% des Molekulargewichtsbereichs 32 bis 3000
unter Einhaltung einer NCO-Kennzahl von 80 bis 200 unter Urethan- und gegebenenfalls Harnstoffbildung umsetzt, wobei gegebenenfalls im Überschuß vorliegende NCO-Gruppen gegebenenfalls durch gleichzeitig oder anschließend erfolgende Sekundärreaktionen bis auf einen Restgehalt von maximal 1,0 Gew.-% abreagiert werden, mit der Maßgabe, daß Art und Menge der Komponente C) so bemessen werden, daß in den resultierenden Polyadditionsverbindungen mindestens 30 Gew.-% an über die Komponente C) eingebauten Ethylenoxideinheiten vorliegen.

Gegenstand der Erfindung sind auch die nach diesem Verfahren erhältlichen Polyadditionsverbindungen.

Gegenstand der Erfindung ist schließlich auch die Verwendung der nach dem erfindungsgemäßen Verfahren erhältlichen Polyadditionsverbindungen als Dispergiermittel bei der Einarbeitung von Feststoffen in wäßrige Lacke oder Beschichtungsmittel.

Die beim erfindungsgemäßen Verfahren einzusetzende Polyisocyanatkomponente A) weist eine (mittlere) NCO-Funktionalität von mindestens 2,5, vorzugsweise mindestens 3,0 und einen NCO-Gehalt von 5 bis 50, vorzugsweise 7 bis 30 Gew.-% auf. Die Polyisocyanatkomponente A) besteht aus mindestens einem organischen Polyisocyanat. Geeignete Polyisocyanate sind höherfunktionelle, unmodifizierte Polyisocyanate oder den gemachten Angaben bezüglich NCO-Gehalt und -Funktionalität entsprechende Modifizierungsprodukte der an sich bekannten Polyisocyanate, insbesondere Diisocyanate.

Unmodifizierte Polyisocyanate, die als Komponente A) oder als Teil der Komponente A) geeignet sind, sind beispielsweise die höherfunktionellen Polyisocyanate der Diphenylmethan-Reihe, wie sie neben den entsprechenden Diisocyanaten bei der Phosgenierung von Anilin/Formaldehyd-Kondensaten anfallen oder aber an sich bekannte höherfunktionelle Polyisocyanate wie beispielsweise 4,4',4''-Triisocyanato-triphenylmethan.

Im allgemeinen bestehen die Polyisocyanate der Komponente A) jedoch aus den bereits angesprochenen Modifizierungsprodukten einfacher Polyisocyanate. Unter "Modifizierung" ist in diesem Zusammenhang insbesondere die Herstellung von Biuret-, Urethan-, Allophanat- und/oder Isocyanuratgruppen aufweisenden Derivaten von einfachen Polyisocyanaten, insbesondere Diisocyanaten zu verstehen. Zur Herstellung derartiger Derivate einzusetzende Diisocyanate sind beispielsweise Hexamethylendiisocyanat, Cyclohexan-1,3- und -1,4-Diisocyanat sowie beliebige Gemische dieser Isomeren, 1-Isocysnato-3,3,5-trimethyl-5-isocyanatomethyl-cyclohexan, 2,4- und 2,6-Hexahydrotoluylendiisocyanat sowie beliebige Gemische dieser Isomeren, Perhydro-2,4'-und/oder -4,4'-diphenylmethandiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat.

Besonders bevorzugt werden zur Herstellung der modifizierten Diisocyanate die technisch wichtigen Polyisocyanate verwendet, wie beispielsweise 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technische Gemische mit 2,4'- und 2,2'-Diisocyanatodiphenylmethan, Hexamethylendiisocyanat oder Gemische dieser Diisocyanate. Ganz besonders bevorzugt handelt es sich bei den Polyisocyanaten der Komponente A) um die Isocyanuratgruppen aufweisende Modifizierungsprodukte von 2,4-Diisocyanatotoluol oder dessen technischen Gemische mit bis zu 35 Gew.-%, bezogen auf Gemisch, an 2,6-Diisocyanatotoluol. Diese besonders bevorzugten, Isocyanuratgruppen aufweisenden Polyisocyanate weisen im allgemeinen einen NCO-Gehalt von 12 bis 24 Gew.-% bei einer NCO-Funktionalität von 3 bis 6 auf. Oftmals wird die Polyisocyanatkomponente A) in Form einer Lösung in einem inerten Lösungsmittel wie beispielsweise Butylacetat eingesetzt.

Bei der Ausgangskomponente B) handelt es sich um Verbindungen der bereits oben genannten allgemeinen Formel (I), wobei die Variablen die bereits oben genannte Bedeutung haben. Bevorzugte Ausgangskomponenten B) sind solche, für welche
R^{f} für eine Perfluoralkylgruppe mit 4 bis 10 Kohlenstoffatomen steht,
R¹ für einen Alkylrest mit 1 bis 3 Kohlenstoffatomen steht,
AO für einen Alkylenoxidrest mit 2 oder 3 Kohlenstoffatomen, insbesondere einen Ethylenoxidrest steht und
r für 1 steht.

Konkrete Beispiele für Verbindungen, die als Komponente B), gegebenenfalls im Gemisch, eingesetzt werden können, sind N-Methyl-N-(2-hydroxyethyl)-1-perfluorbutansulfonamid, N-Ethyl-N-(2-hydroxyethyl)-1-perfluorbutansulfonamid, N-Propyl-N-(2-hydroxyethyl)-1-perfluorbutansulfonamid, N-Methyl-N-(2-hydroxyethyl)-1-perfluorpentansulfonamid, N-Ethyl-N-(2-hydroxyethyl)-1-perfluorpentansulfonamid, N-Methyl-N-(2-hydroxyethyl)-1-perfluorhexansulfonamid, N-Ethyl-N-(2-hydroxyethyl)-1-perfluorhexansulfonamid, N-Propyl-N-(2-hydroxyethyl)-1-perfluorhexansulfonamid, N-Methyl-N-(2-hydroxyethyl)-1-perfluorheptansulfonamid, N-Ethyl-N-(2-hydroxyethyl)-1-perfluorheptansulfonamid, N-Butyl-N-(2-hydroxyethyl)-1-perfluorheptansulfonamid, N-(2-Hydroxyethyl)-1-perfluoroctansulfonamid, N-Methyl-N-(2-hydroxyethyl) 1-perfluoroctansulfonamid, N-Ethyl-N-(2-hydroxyethyl)-1-perfluoroctansulfonamid, N-1-Methylethyl-N-(2-hydroxyethyl)-1-perfluoroctansulfonamid, N-Propyl-N-(2-hydroxyethyl)-1-perfluorhexansulfonamid, N-Butyl-N-(2-hydroxyethyl)-1-perfluoroctansulfonamid, N-Ethyl-N-(2,3-dihydroxypropyl)-1-perfluoroctansulfonamid, N-Propyl-N-(2,3-dihydroxypropyl)-1-perfluoroctansulfonamid, N-Ethyl-N-(2-hydroxyethyl)-1-perfluornonansulfonamid, N-Propyl-N-(2-hydroxyethyl)-1-perfluordecansulfonamid und N-Propyl-N-(2-hydroxyethyl)-1-perfluordecanonsulfonamid.

Bevorzugt werden verwendet: N-Methyl- und N-Ethyl-N-(2-hydroxyethyl)-1-perfluorbutansulfonamid sowie N-Methyl- und N-Ethyl-N-(2-hydroxyethyl)-1-perfluoroctansulfonamid.

Die Ausgangsverbindungen B) werden bei der Durchführung des erfindungsgemäßen Verfahrens in Mengen von 0,1 bis 50, vorzugsweise 1 bis 40 Äquivalent-%, bezogen auf die NCO-Gruppen der Komponente A), eingesetzt.

Die einwertige Alkoholkomponente C) besteht aus mindestens einem einwertigen Alkohol mit einem (aus dem Hydroxylgruppengehalt berechenbaren) Molekulargewicht von 150 bis 5000, vorzugsweise 500 bis 3000, der 50 bis 99,5, vorzugsweise 70 bis 99,5 Gew.-%, bezogen auf das Gesamtgewicht des einwertigen Alkohols, an innerhalb einer Polyetherkette eingebauten Ethylenoxideinheiten aufweist. Als Komponente C) oder als Teil der Komponente C) geeignet sind demzufolge an sich bekannte Alkoxylierungsprodukte von einwertigen Startermolekülen, die pro Molekül im statistischen Mittel mindestens 3, vorzugsweise 7 bis 100 Alkylenoxideinheiten aufweisen, die ihrerseits zu mindestens 50 Gew.-%, vorzugsweise 70 bis zu 100 Gew.-% aus Ethylenoxideinheiten bestehen.

Zur Herstellung der einwertigen Polyetheralkohole geeignete Startermoleküle sind insbesondere einwertige Alkohole, Phenole oder Carbonsäuren. Die Startermoleküle weisen im allgemeinen 1 bis 30, vorzugsweise 1 bis 10 und besonders bevorzugt 1 bis 4 Kohlenstoffatome auf. Beispielhaft genannt seien Alkohole wie Methanol, Ethanol, n-Propanol, n-Butanol, 1-Pentanol, 1-Hexanol, 1-Octanol, Oleylalkohol oder Benzylalkohol oder Phenole wie beispielsweise Phenol, Kresole, Methylphenole, Nonylphenole oder Dodecylphenole oder alkoxylierbare Säuren wie beispielsweise Essigsäure, Buttersäure, Caprin, Laurin, Palmitin oder Stearinsäure oder auch Cyclohexancarbonsäure. Die bevorzugten Startermoleküle sind einwertige Alkohole mit 1 bis 4 Kohlenstoffatomen der oben beispielhaft genannten Art.

Zur an sich bekannten Alkoxylierungsreaktion werden Ethylenoxid oder Kombinationen aus Ethylenoxid mit bis zu 50, vorzugsweise bis zu 30 Gew.-%, bezogen auf die Gesamtmenge der Alkylenoxide, an anderen Alkylenoxiden wie insbesondere Propylenoxid verwendet. Falls außer Ethylenoxid auch andere Alkylenoxide mitverwendet werden, kann dies unter Verwendung entsprechender Alkylenoxidgemische oder auch unter sukzessiver Addition der Alkylenoxide unter Blockbildung erfolgen.

Die Komponente C) kommt in einer Menge von 5 bis 90, vorzugsweise 20 bis 80 Äquivalent-%, bezogen auf die Isocyanatgruppen der Komponente A) zum Einsatz.

Bei der Komponente D) handelt es sich um organische Verbindungen, die neben mindestens einer tert.-Aminogruppe eine gegenüber Isocyanatgruppen im Sinne der Isocyanat-Additionsreaktion reaktionsfähige Gruppe, insbesondere Hydroxyl- oder Aminogruppe aufweisen. Diese Verbindungen haben im allgemeinen ein Molekulargewicht von 88 bis 250, insbesondere von 88 bis 150.

Als Komponente D) bzw. als Teil der Komponente D) kommen beispielsweise Aminoalkohole wie N,N-Diethylethanolamin, N,N-Dimethylethanolamin, N,N-Dimethylisopropanolamin, N,N-Dimethyl-1,3-propandiamin, N,N-Diethylethylendiamin, 2-Dibutylamino-ethanol, 3-(Dimethylamino)-1-propanol, 1-Methylpiperazin, 1-Methyl-4-piperidinol, 2-Morpholinoethanol, 2-Piperidinoethanol, 2-Piperazinoethanol, 2-Piperazinoethylamin, 3-Morpholinopropylamin, N,N-Dibutyl-trimethylendiamin, 3-(Diethylamino)-1-propanol, N-Methyl-3-pyrrolidinol, 2-(Hydroxymethyl)-N-methylpiperidin oder mindestens eine tert.-Aminogruppe und eine primäre oder sekundäre Aminogruppe aufweisende Polyamine in Betracht. Beispiele derartiger Verbindungen sind N,N-Dimethyl-ethylendiamin, N,N-Diethyl-1,4-butandiamin oder N-Methyl-piperazin.

Zu den bevorzugten Verbindungen, die als Komponente D) bzw. als Teil der Komponente D) zum Einsatz gelangen, gehören 4-(2-Hydroxyethyl)-pyridin, 2-Hydroxyethylmorpholin, N,N-Dimethyl-1,3-propandiamin, N,N-Diethyl-1,4-butandiamin und N,N-Dimethylaminoethanol und N,N-Dimethylaminopropylamin.

Die Komponente D) kommt in einer Menge von 0 bis 40, vorzugsweise 5 bis 30 Äquivalent-%, bezogen auf die Isocyanatgruppen der Komponente A) zum Einsatz. Vorzugsweise wird die Komponente D) in einer solchen Menge mitverwendet, daß in den erfindungswesentlichen Additionsprodukten 2 bis 200 und insbesondere 5 bis 100 Milliäquivalente an tert.-Aminogruppen pro 100 g Feststoff vorliegen.

Bei der gegebenenfalls mitzuverwendenden Komponente E) handelt es sich um organische Verbindungen des Molekulargewichtsbereichs 32 bis 3000, vorzugsweise 118 bis 2000 mit ein oder zwei gegenüber Isocyanatgruppen reaktionsfähigen Gruppen, insbesondere mit ein oder zwei alkoholischen Hydroxylgruppen. Beispielhaft genannt seien insbesondere Polyester- oder Polyetherdiole der an sich bekannten Art des genannten Molekulargewichtsbereichs. Bevorzugt handelt es sich um einwertige Alkohole des Molekulargewichtsbereichs 130 bis 2000, die durch an sich bekannte Anlagerung von ε-Caprolacton an einwertige Alkohole erhalten werden können. Derartige einwertige Alkohole sind beispielsweise solche der bereits oben im Zusammenhang mit der Komponente C) als Startermoleküle beispielhaft genannten Art.

Die Komponente E) wird bei der Herstellung der erfindungswesentlichen Additionsverbindungen, falls überhaupt, in einer Menge von bis zu 40, vorzugsweise bis zu 10 Äquivalent-%, bezogen auf die Isocyanatgruppen der Komponente A) eingesetzt. Besonders bevorzugt wird ohne Mitverwendung der Komponente E) gearbeitet.

Im Rahmen der gemachten Offenbarung werden im übrigen Art- und Mengenverhältnisse der beim erfindungsgemäßen Verfahren einzusetzenden Ausgangsmaterialien so gewählt, daß die resultierenden Polyadditionsprodukte einen Fluorgehalt von 0,5 bis 50, vorzugsweise 0,7 bis 20 Gew.-%, einen Gehalt an Ethylenoxideinheiten von 30 bis 95, vorzugsweise 50 bis 85 Gew.-% und einen Gehalt an tert.-Aminogruppen von 2 bis 200, vorzugsweise 5 bis 100 Milliäquivalenten pro 100 g Feststoff aufweisen.

Zur Durchführung des erfindungsgemäßen Verfahrens kann man beispielsweise so vorgehen, daß man die Polyisocyanate A) mit den Verbindungen B), C), D) und gegebenenfalls E) ein- oder mehrstufig bei 20 bis 250°C, vorzugsweise 60 bis 140°C miteinander zur Umsetzung bringt, wobei das Äquivalentverhältnis von Isocyanatgruppen der Komponente A) zu gegenüber Isocyanatgruppen reakionsfähigen Gruppen der Komponenten B) bis D) bei 0,8:1 bis 2,0:1, vorzugsweise 0,9:1 bis 1,7:1 und insbesondere bei 1:1 bis 1,6:1 liegt. Dies entspricht NCO-Kennzahlen von 80 bis 200, vorzugsweise 90 bis 170 und insbesondere von 100 bis 160.

Bei der Umsetzung kann man beispielsweise so vorgehen, daß man die Isocyanatkomponente A) mit einem Gemisch der Komponenten B), C), D) und gegebenenfalls E) umsetzt oder aber zunächst aus der Komponente A) und einem Teil der Reaktionspartner B) bis E) ein NCO-Prepolymer herstellt, welches anschließend in einer 2. Stufe mit dem Rest der Reaktionspartner mit gegenüber Isocyanatgruppen reaktionsfähigen Gruppen zur Reaktion gebracht wird.

Falls bei der Umsetzung ein NCO-Überschuß, bezogen auf die gegenüber Isocyanatgruppen reaktionsfähigen Gruppen der Reaktanden B) bis E) zum Einsatz gelangt, kann dieser Überschuß gegebenenfalls durch Sekundärreaktionen bis auf einen Restgehalt von maximal 1,0 Gew.-%, vorzugsweise von 0 Gew.-% reduziert werden. Bei diesen Sekundärreaktionen kann es sich beispielsweise um die Bildung von Allophanatgruppen, Biuretgruppen oder von Isocyanuratgruppen durch entsprechende Additions- bzw. Polymerisationsreaktionen der überschüssigen NCO-Gruppen handeln. Derartige Reaktionen werden oftmals von den vorliegenden tert.-Stickstoffatomen katalysiert und durch 0,1 bis 24-stündiges Erhitzen auf 60 bis 250°C bewirkt.

Obwohl die Reaktion, von den geringen Lösungsmitteln, die gegebenenfalls zum Auflösen der Komponente A) eingesetzt werden, abgesehen, vorzugsweise in der Schmelze durchgeführt wird, ist es auch möglich, beispielsweise zur Erniedrigung der Viskosität inerte Lösungsmittel mitzuverwenden. Geeignete Lösungsmittel sind beispielsweise Dimethylformamid, N-Methylpyrrolidon, Dimethylacetamid, Aceton, 2-Butanon, Essigsäureethylester, Essigsäurebutylester, Methoxypropylacetat, Toluol oder Gemische derartiger Lösungsmittel. Im allgemeinen werden die Lösungsmittel im Verlauf oder im Anschluß an die Umsetzung, beispielsweise durch Destillation, entfernt.

Gegebenenfalls können auch an sich bekannte, die Isocyanat-Additionsreaktion beschleunigende, Katalysatoren mitverwendet werden. Beispielhaft genannt seien Triethylamin, N,N-Dimethylbenzylamin oder Zinnverbindungen wie beispielsweise Zinn(II)octoat oder Dibutylzinndilaurat.

Die Umsetzung kann unter Normaldruck erfolgen, gegebenenfalls kann jedoch auch erhöhter Druck zur Anwendung gelangen. Im Übrigen erfordert das Verfahren keine verfahrenstechnischen Besonderheiten. Das gleiche gilt für die Aufarbeitung.

Die erfindungswesentlichen Polyisocyanat-Additionsprodukte stellen Dispergiermittel für Feststoffe, insbesondere Pigmente oder Füllstoffe bei der Herstellung von entsprechenden wäßrigen Lacken oder Beschichtungsmitteln dar. Bei dieser erfindungsgemäßen Verwendung kommen die erfindungswesentlichen Polyadditionsverbindungen in einer Menge zum Einsatz, die 0,1 bis 20 Gew.-%, vorzugsweise 0,5 bis 10 Gew.-%, bezogen auf das Gewicht der Feststoffe beträgt. Die erfindungswesentlichen Verbindungen können bei der erfindungsgemäßen Verwendung entweder vorab mit den zu dispergierenden Feststoffen vermischt werden oder direkt in dem Dispergiermittel (Wasser) vor oder gleichzeitig mit der Zugabe der Feststoffe gelöst werden. Im allgemeinen ist es jedoch bevorzugt, die erfindungswesentlichen Polyadditionsverbindungen vor dem Dispergierprozeß auf die Feststoffe durch intensives Vermischen, aufzubringen.

Die erfindungswesentlichen Dispergiermittel eignen sich zur Erleichterung der Dispergierung von beliebigen Feststoffen, insbesondere von Pigmenten und Füllstoffen.

Als Pigmente können in diesem Zusammenhang beispielsweise anorganische oder organische Pigmente, sowie Ruße genannt werden. In Betracht zu ziehende anorganische Pigmente sind beispielsweise Titandioxide, Eisenoxide oder Spinelle, organische Pigmente sind beispielsweise Azopigmente, z.B. Pigmente der Monoazoreihe, Acetessigsäure-Derivate, Derivate der 2,3-Oxinaphtholsäure, 2,3-Oxinaphtholsäurearylamid-Derivate, Pigmente der Diazoreihe, Abkömmlinge des 3,3-Dichlorbenzidins, Diarylgelbtypen, kondensierte Disazopigmente, Metallkomplex-Pigmente, anthrachinoide Pigmente, Phthalocyaninpigmente, polycyclische Pigmente, insbesondere solche der Anthrachinon-, Thioindigo-, Chinacridon-, Dioxazin-, Pyrrolo-Pyrrol-, Naphthalintetracarbonsäure-, Pterylen-, Isoamidolin(on)-, Flavanthron-, Pyranthron- oder Isoviolanthron-Reihe.

Bevorzugte Pigmente sind β- und γ-Kristallmodifikationen des unsubstituierten linearen Chinacridons sowie Mischkristalle aus 2,9-Dimethylchinacridon und unsubstituierten Chinacridonen.

Besonders bevorzugt eignen sich die erfindungsgemäßen Dispergiermittel zum Dispergieren von Ruß in wäßrigen Lacksystemen.

Füllstoffe, die erfindungsgemäß in wäßrigen Lacken dispergiert werden können, sind beispielsweise solche auf Basis von Kaolin, Talkum, anderen Silikaten, Kreide, Glasfasern, Glasperlen oder Metallpulvern.

Als Lacksysteme, in denen erfindungsgemäß die beispielhaft genannten Festkörper dispergiert werden können, kommen beliebige wäßrige 1K- oder 2K-Lacke in Betracht. Beispielhaft genannt seien wäßrige 1K-Lacke wie beispielsweise solche auf Basis von Alkyd-, Acrylat-, Epoxid-, Polyvinylacetat-, Polyester- oder Polyurethanharzen oder wäßrige 2K-Lacke, beispielsweise solchen auf Basis von (i) Hydroxylgruppen aufweisenden Polyacrylat- oder Polyesterharzen und (ii) Melaminharzen oder gegebenenfalls blockierten Polyisocyanatharzen als Vernetzer. Auch wäßrige Beschichtungsmittel auf Basis von Polyepoxidharzen kommen in Betracht.

Die erfindungsgemäßen Polyisocyanat-Polyadditionsprodukte können im übrigen auch als Netz- oder Dispergiermittel bei der Einarbeitung von Feststoffen, insbesondere von Pigmenten in Kunststofformulierungen verwendet werden.

Die nachfolgenden Beispiele dienen der weiteren Illustrierung der vorliegenden Erfindung.

### Beispiele

### Einsatzstoffe

### Komponente A)

Polyisocyanat 1: 51gew.-%ige Lösung in n-Butylacetat eines Isocyanuratgruppen aufweisenden Trimerisats von 2,4-Diisocyanatotoluol mit einem NCO-Gehalt der Lösung von 8,0 Gew.-% (®Desmodur IL der Bayer AG)
Polyisocyanat 2: 2,4-Diisocyanatotoluol

### Komponente B)

Fluoralkohol: N-Methyl-N-(2-hydroxyethyl)-1-perfluoroctylsulfonamid

### Komponente C)

Polyol 1: einwertiger Polyetheralkohol des Molekulargewichts 2250 mit einem Ethylenoxidgehalt von 87,5 Gew.-%, hergestellt durch Alkoxylierung von n-Butanol unter Verwendung eines Gemischs aus Ethylenoxid mit einer geringen Menge an Propylenoxid.
Polyol 2: einwertiger Polyetheralkohol des Molekulargewichts 750 mit einem Ethylenoxidgehalt von 98 Gew.-%, hergestellt durch Ethoxylierung von Methanol.

### Komponente D)

Amin 1: N,N-Dimethyl-1,3-propandiamin
Amin 2: N,N-Dimethylethanolamin
Amin 3: 4-Morpholinoethanol

### Beispiele 1 und 2 (erfindungsgemäßes Verfahren)

In einem Dreihalskolben mit Innenthermometer und mechanischer Rührung legt man die in der Tabelle 1 angegebene Menge Polyol vor und entwässert 2 Stunden bei 120°C und einem Druck von 10 mbar. Man gibt bei 70°C die in der Tabelle 1 angegebenen Mengen Fluoralkohol und Isocyanat zu, steigert die Temperatur auf 100°C und rührt 2 Stunden nach. Das entstandene Prepolymer löst man in 250 ml Aceton. In einem weiteren Dreihalskolben legt man die in der Tabelle 1 angegebene Menge Amin in 50 ml Aceton vor und kühlt den Kolben auf +15°C. Man tropft die Prepolymer-Lösung so zu, daß die Innentemperatur des Kolbens +15°C nicht überschreitet. Man rührt 15 Minuten nach. Man erhält eine Lösung einer wasserlöslichen, Perfluoralkylgruppen enthaltenden Polyadditionsverbindung, die zur Dispergierung von Pigmenten oder zur Dispergierung und Oberflächenbehandlung von beliebigen Füllstoffen verwendet werden kann.

### Herstellung wäßriger Lösungen

Die Lösung der wasserlöslichen, Perfluoralkylgruppen enthaltenden Polyadditionsverbindungen werden in einen Dreihalskolben mit Innenthermometer, mechanischer Rührung und aufgesetzter Destillierbrücke gegeben, mit der in der Tabelle 1 angegebenen Menge Wasser versetzt und das Lösemittel bei einer Innentemperatur von 40°C und einem Druck von ca. 80 mbar abdestilliert. Man erhält klare lösemittelfreie Lösungen.

### Beispiele 3 bis 13 (erfindungsgemäßes Verfahren)

In einem Dreihalskolben mit Innenthermometer, mechanischer Rührung und Destillerbrücke legt man die in der Tabelle 1 angegebene Menge Polyol vor und entwässert 2 Stunden bei 120°C und einem Druck von 10 mbar. Man gibt bei 70°C die in der Tabelle 1 angegebene Menge Isocyanat zu, steigert die Temperatur auf 100°C und rührt 2 Stunden bei dieser Temperatur nach. Während dieser Zeit werden bei einem Druck von 10 mbar über die Destillierbrücke sämtliche flüchtigen Stoffe entfernt. Man gibt die in der Tabelle 1 angegebene Menge Fluoralkohol zu und rührt bei 100°C 1 Stunde nach. Anschließend gibt man die in der Tabelle 1 angegebene Menge Amin zu und rührt eine weitere Stunde nach. Man erhält eine wasserlösliche, Perfluoralkylgruppen enthaltende Polyadditionsverbindung, die zur Dispergierung von Pigmenten oder zur Dispergierung und Oberflächenbehandlung von beliebigen Füllstoffen verwendet werden kann.

### Herstellung wäßriger Lösungen

Die in den Beispielen 3 bis 13 erhaltenen Verbindungen unter Erwärmung auf 65°C in der in der Tabelle 1 angegebenen Menge Wasser gelöst. Man erhält in allen Fällen klare Lösungen.

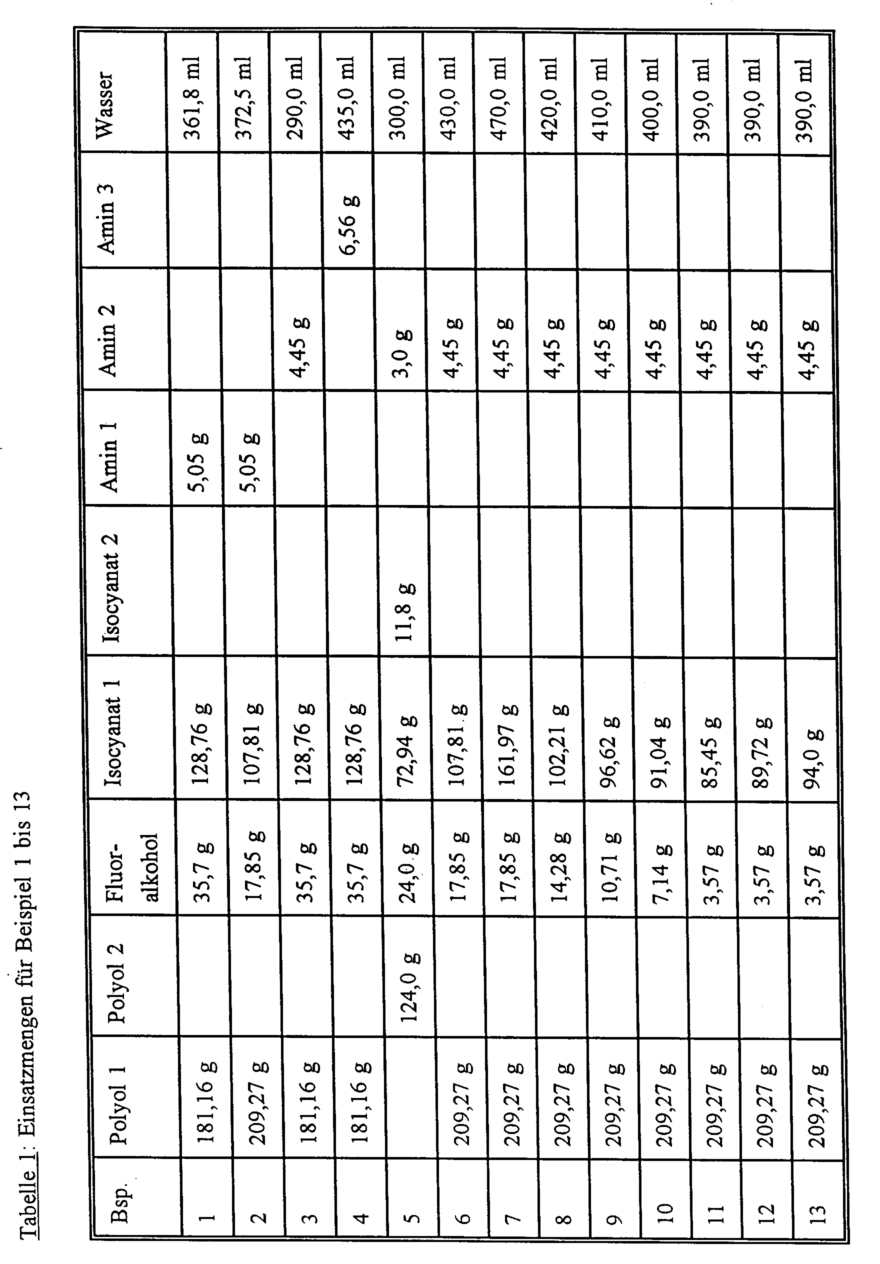

### Beispiele 14 bis 26 (Verwendung)

### Herstellung der Pigmentpasten

In eine 300 ml Rundglasflasche werden 15,0 g Schwarzpigment (Farbruß FW 200, Handelsprodukt Fa. Degussa, 0,2 g Entschäumer (Nopco 803E4, Handelsprodukt Fa. Münzig Chemie), 0,7 g Propylenglykol, 28,6 g Netzmittel (s. Tabelle 2) und 150 g Glasperlen (Durchmesser = 3 mm) gegeben und durch Schütteln in einem handelsüblichen Dispergator 90 Minuten dispergiert. Anschließend werden die Glasperlen abfiltriert.

### Lackherstellung, Auftragung und Beurteilung

In einer 100 ml Rundglasflasche werden 20 g Glasperlen (Durchmesser = 3 mm), 5,0 g Pigmentpaste, 0,3 g Antioxidanz (Ascinin R konz., Handelsprodukt Fa. Bayer AG), 45,0 g wäßriges Alkydharz (Resydrol AY 586W, Handelsprodukt Fa. Vianova Kunstharz AG) und 0,3 g Sikativ (Octa Soligen Co 7 aqua, Handelsprodukt Fa. Borchers GmbH) im Dispergator 30 Minuten homogenisiert. Nach einer Reifezeit von ca. 12 Stunden werden 100 µm Naßfilm auf eine entfettete Glasplatte aufgezogen. Nach 1 Tag Lagerung bei Raumtemperatur wird gemäß DIN 67530, ISO 2813, ASTM D 523 der Haze Gloss (Glanzschleier) und der Glanz nach Gardner (Winkel 20°) gemessen.

**Tabelle 2**

| Verwendung der erfindungsgemäßen wasserlöslichen, Perfluoralkylgruppen enthaltenden Polyadditionsverbindungen | | | |
|---|---|---|---|
| Bsp. | Verbindung aus Beispiel | Glanz 20° | Haze Gloss |
| 14 | 1 | 80,4 | 6,3 |
| 15 | 2 | 80,4 | 4,3 |
| 16 | 3 | 79,9 | 9,2 |
| 17 | 4 | 80,1 | 6,6 |
| 18 | 5 | 81,9 | 9,7 |
| 19 | 6 | 79,8 | 6,6 |
| 20 | 7 | 80,8 | 15,1 |
| 21 | 8 | 79,8 | 5,5 |
| 22 | 9 | 79,9 | 3,9 |
| 23 | 10 | 79,9 | 5,9 |
| 24 | 11 | 79,9 | 4,3 |
| 25 | 12 | 80,8 | 9,2 |
| 26 | 13 | 80,7 | 10,2 |
| Vergleich | Lösemittel enthaltendes Netz- und Dispergiermittel gemäß EP-OS 154 678 | 80,9 | 30,7 |

## Patentansprüche

1. Verfahren zur Herstellung von wasserlöslichen, Perfluoralkylgruppen enthaltenden Polyadditionsverbindungen, dadurch gekennzeichnet, daß man
A) eine Polyisocyanatkomponente einer (mittleren) NCO-Funktionalität von mindestens 2,5 und einem NCO-Gehalt von 5 bis 50 Gew.-%
mit
B) 0,1 bis 50 Äquivalent-%, bezogen auf die Isocyanatgruppen von A), einer Fluor enthaltenden Alkoholkomponente, bestehend aus mindestens einer Verbindung der allgemeinen Formel (I) 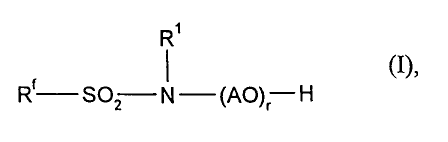 in welcher
R^{f} für eine Perfluoralkylgruppe mit 4 bis 20 Kohlenstoffatomen steht,
R¹ eine Alkylgruppe mit 1 bis 6 Kohlenstoffatomen bedeutet,
AO für einen Alkylenoxidrest mit 2 bis 10 Kohlenstoffatomen steht und
r eine Zahl von 1 bis 3 bedeutet,
C) 5 bis 90 Äquivalent-%, bezogen auf die Isocyanatgruppe von A), einer einwertigen Alkoholkomponente, bestehend aus mindestens einem einwertigen Polyetheralkohol des Molekulargewichtsbereichs 150 bis 5000 mit einem Gehalt an Ethylenoxideinheiten von 50 bis 99,5 Gew.-%, der durch Alkoxylierung eines einwertigen Startermoleküls hergestellt worden ist,
D) 5 bis 80 Äquivalent-%, bezogen auf die Isocyanatgruppen von A), einer Aminkomponente, bestehend aus mindestens einem tertiären Amin des Molekulargewichtsbereichs 88 bis 250 mit einer gegenüber Isocyanatgruppen im Sinne der NCO-Additionsreaktion reaktionsfähigen Gruppe
und
E) 0 bis 40 Äquivalent-%, bezogen auf die Isocyanatgruppen von A), an von den Komponenten B) bis D) verschiedenen, im Sinne der NCO-Additionsreaktion ein- oder mehrwertigen Aufbaukomponenten mit einem Gehalt an Ethylenoxideinheiten von weniger als 50 Gew.-% des Molekulargewichtsbereichs 32 bis 3000
unter Einhaltung einer NCO-Kennzahl von 80 bis 200 unter Urethan- und gegebenenfalls Harnstoffbildung umsetzt, wobei gegebenenfalls im Überschuß vorliegende NCO-Gruppen gegebenenfalls durch gleichzeitig oder anschließend erfolgende Sekundärreaktionen bis auf einen Restgehalt von maximal 1,0 Gew.-% abreagiert werden, mit der Maßgabe, daß Art und Menge der Komponente C) so bemessen werden, daß in den resultierenden Polyadditionsverbindungen mindestens 30 Gew.-% an über die Komponente C) eingebauten Ethylenoxideinheiten vorliegen.

2. Verfahren gemäß Anspruch 1, dadurch gekennzeichnet, daß man als Polyisocyanatkomponente A) ein Isocyanuratgruppen aufweisendes Polyisocyanatgemisch einer mittleren NCO-Funktionalität von 3 bis 6 mit einem NCO-Gehalt von 12 bis 24 Gew.-% verwendet, welches durch Trimerisierung eines Teils der Isocyanatgruppen von 2,4-Diisocyanatotoluol oder dessen technischen Gemische mit bis 35 Gew.-%, bezogen auf Gemisch, an 2,6-Diissocyanatotoluol erhalten worden ist.

3. Verfahren gemäß Anspruch 1 und 2, dadurch gekennzeichnet, daß man Art- und Mengenverhältnisse der Komponenten A) bis E) so bemißt, daß die Polyadditionsverbindungen einen Fluorgehalt von 0,7 bis 10 Gew.-%, einen Gehalt an Ethylenoxideinheiten von 50 bis 85 Gew.-% und einen Gehalt an tert. Aminogruppen von 5 bis 100 Milliäquivalenten pro 100 g Feststoff enthalten.

4. Gemäß Anspruch 1 bis 3 erhältliche Polyadditionsverbindungen.

5. Verwendung der gemäß Anspruch 1 bis 3 erhältlichen Polyadditionsverbindungen als Dispergiermittel bei der Einarbeitung von Feststoffen in wäßrige Lacke oder Beschichtungsmittel.

6. Verwendung gemäß Anspruch 5 zur Dispergierung von Pigmenten.

7. Verwendung gemäß Anspruch 5 und 6 zur Dispergierung von Ruß.
